(19) Europäisches Patentamt
European Patent Office
Office européen des brevets

(11) **EP 3 295 151 B1**

(12) **EUROPEAN PATENT SPECIFICATION**

(45) Date of publication and mention
of the grant of the patent:
**04.11.2020  Bulletin 2020/45**

(21) Application number: **16713026.9**

(22) Date of filing: **22.03.2016**

(51) Int Cl.:
*G01N 21/03* (2006.01)     *G01N 21/05* (2006.01)

(86) International application number:
**PCT/GB2016/050789**

(87) International publication number:
**WO 2016/181100 (17.11.2016 Gazette 2016/46)**

(54) **HOLLOW FIBRE WAVEGUIDE GAS CELLS**

HOHLFASERWELLENLEITERGASZELLEN

CELLULES À GAZ DE GUIDE D'ONDES À FIBRES CREUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2015  GB 201508115**

(43) Date of publication of application:
**21.03.2018  Bulletin 2018/12**

(73) Proprietor: **Cranfield University
Cranfield, Bedfordshire MK43 0AL (GB)**

(72) Inventors:
• **FRANCIS, Daniel
Cranfield, Bedfordshire MK43 0AL (GB)**
• **HODGKINSON, Elizabeth Jane
Cranfield, Bedfordshire MK43 0AL (GB)**
• **TATAM, Ralph Peter
Cranfield, Bedfordshire MK43 0AL (GB)**

(74) Representative: **Haseltine Lake Kempner LLP
138 Cheapside
London EC2V 6BJ (GB)**

(56) References cited:
**EP-A1- 1 229 322         EP-A1- 1 772 758
EP-A1- 2 058 682         WO-A1-2011/107868
WO-A2-2006/102593     WO-A2-2006/110749
US-A- 5 165 773           US-A- 5 773 828
US-A- 5 957 858**

**Description**

The present disclosure relates to a connector for a hollow fibre waveguide gas cell, in particular, although not exclusively, to a connector comprising a window which intersects or is in close proximity to a junction of bores within the connector, the bores transmitting gas through the connector to or from a hollow fibre waveguide.

Background

Optical absorption sensors are used in the measurement of concentrations of analytes including gases, liquids and solid samples. For example in the case of gas sensing, they offer a high level of specificity to the gas of interest, as well as minimal drift and fast response times. The measurements can be made in-situ and in real time, which is beneficial for processes requiring continuous monitoring. Optical spectroscopy is a technique whereby the concentration of the gaseous analyte is measured through the attenuation of light due to molecular absorption. The Beer-Lambert law (equation (1)) relates the optical absorbance to the sample concentration and the path length travelled through the absorbing medium.

$$I(\alpha) = I_0 \exp(-\alpha L) \qquad (1)$$

Where $I(\alpha)$ is the intensity transmitted through the cell in the presence of an absorbing medium, $I_0$ is the intensity transmitted though the gas cell in the absence of light absorption, $\alpha$ is the absorption coefficient (m$^{-1}$), and L is the optical path length of the cavity (m). The absorption coefficient $\alpha$ is the product of the gas concentration (in atm for example) and the specific absorptivity of the gas $\varepsilon$ (in m$^{-1}$atm$^{-1}$). At low concentrations this equation becomes approximately linear, with the concentration of the gas present directly proportional to the absorbance, such that the absorbance A can be written as

$$A = \frac{I_0 - I}{I_0} \approx \alpha L \qquad (2)$$

Equation (2) may be used to define a noise-equivalent absorbance (NEA) at which the RMS noise in the measured value of $I$ is equal to the measured value of $I$.

Therefore, gas cells with longer path lengths offer better signal-to-noise ratios and are thus desirable. However, longer path lengths tend to result in reduced responsiveness of the gas cell.

The mid-infrared region of the electromagnetic spectrum may be known as the 'molecular fingerprint region' due to the presence of numerous spectral absorption features of many atmospheric species of interest, including carbon dioxide, methane and NO$_x$ This is therefore the region of choice for optical spectroscopy; however a lack of reliable, stable, coherent, and tunable sources that operate at room temperature has hindered its exploitation. The relatively recent advent of the quantum cascade laser (US patents nos 5,457,709 and 5,936,989) with the potential for emission across the 4 - 15 $\mu$m range has enabled the emergence of new spectroscopic technology operating in this wavelength region.

In some applications, for instance certain biomedical applications or headspace analysis, only a small volume of the gaseous sample is available. Additionally, some applications such as breath analysis require fast response times in order to provide sufficient temporal resolution. Hollow fibre waveguides, with their high aspect ratios and their ability to transmit light at this wavelength, therefore make ideal candidates for gas cells for use with mid-IR laser technology.

For the analysis of headspace gases, it may be preferable to use a low flow rate, for example a flow rate of 10cm$^3$min$^{-1}$ may be preferred. Samples subjected to headspace analysis may generate headspace gases at a fixed rate and therefore the gas concentration is increased if the flow rate is reduced. This effect is well-known in the use of vapour generators based on permeation tubes, for example in the OVG-4 Vapour Generator manufactured by Owlstone, Cambridge, UK. Therefore if a conventional gas cell is used with an internal volume of 100cm$^3$, the response time may be increased to 30-60 minutes. It is also known that such long response times may worsen the limit of detection of the measurement since they allow time for the instrument readings to drift. It also may be inconvenient for certain applications to have to wait for such a long time before a reading is available.

US5957858A discloses a method and system for measuring the relative concentrations of first and second isotropic forms of a chemical species within a sample using a waveguide cell. US5165773A discloses a flexible light guide consisting of a flexible tube through which a liquid is continuously passed. EP1229322A1 discloses a cell for analysing fluid and an analysing apparatus using the cell. WO2006/102593A2 discloses a biochemical detection system that comprises an exchangeable cartridge unit with light guiding tubes pre-coated with capture agents and an optical detection unit. US5773828A discloses a gas analyser with a plurality of measuring cells including a case where the cells are different in length from each other.

Statements of Invention

The invention is defined in the independent claims, to which reference should now be made. Advantageous embodiments are set out in the sub claims.

The inventors of the present disclosure have realised that a disadvantage of prior art systems for practical gas sensing is that the ends of the cell may have a relatively large volume compared to the volume of the cell itself, which may lead to increased response times as the gas occupying the inlet volume must be fully cleared before the gas concentration along the optical path is able to reach the value of that at the inlet. The present disclosure advantageously addresses this disadvantage.

The window may be provided proximal to the junction where the first and second bores meet, e.g. in close proximity to or overlapping with the junction. In other words, the window may be provided adjacent to, e.g. immediately adjacent to, or intersecting the junction where the first and second bores meet. The first and second bores may intersect, e.g. overlap, at the junction.

The connector may comprise a recess opposite the first bore. The recess may be configured to receive the window. The window and/or recess may be circular.

The connector may comprise a body. The first and second bores may be provided in the body. The recess may be provided in the body.

The connector may comprise a wall provided between the recess and the second bore. The wall may provide an at least partial mounting surface. A surface of the window may abut the mounting surface. A minimum thickness of the wall between the recess and the second bore may be less than a diameter of the first or second bore.

The window may be positioned such that the window may intersect the junction of the first and second bores. The connector, e.g. connector body, may comprise a planar surface. The planar surface may intersect the junction so as to define an opening. The opening may intersect the first and/or second central axes. A surface of the window may abut the planar surface.

A midline plane of the window may be perpendicular to the first central axis. Alternatively, a midline plane of the window may be disposed at a non-perpendicular angle relative to the first central axis. For example, the midline plane of the window may be disposed at the Brewster angle relative to the first central axis. The Brewster angle is an angle of incidence at which light with a particular polarization from the first bore is transmitted, e.g. perfectly transmitted, through the window with no reflection.

The window may be selectively reflective depending on the frequency of the incident light. The window may be configured to permit light from the first bore at a first frequency to pass through the window. The window may be further configured to reflect light from the first bore at a second frequency into the second bore.

Sealant may be provided between the elongated sleeve and the hollow fibre waveguide.

The connector may comprise a body through which the first and second bores extend. The connector may further comprise an end cap through which the hollow fibre waveguide may pass. The end cap may be configured to threadably engage the body and urge the frusto-conical sleeve into the tapered end so as to form a seal between the body and the hollow fibre waveguide.

The first bore may comprise a first portion with a first diameter and a second portion with a second diameter. The first diameter may be smaller than the second diameter. Accordingly, the first bore may comprise a shoulder, e.g. an annular shoulder, where the first and second portions meet. The first portion may meet the second bore at the junction. The second portion may receive the hollow fibre waveguide. For example, the elongated sleeve and/or hollow fibre waveguide may substantially fill the second portion of the first bore. A similar arrangement may apply to the second bore, e.g. with first and second diameter portions.

A diameter of the first bore and/or second bore may be less than twice the outer diameter of the hollow fibre waveguide. In particular, a diameter of the first bore and/or second bore may be less than 150% of the outer diameter of the hollow fibre waveguide.

A hollow fibre waveguide gas cell may comprise the above-mentioned connector and the hollow fibre waveguide.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

Brief description of the drawings

For a better understanding of the present invention, and to show more clearly how it may be carried into effect, reference will now be made, by way of example, to the accompanying drawings, in which:

**Figure 1** shows a preferred embodiment of a hollow fibre waveguide spectroscopic gas cell constructed from tube fittings. A pair of tube fittings 1 with recessed embedded windows 2 positioned at each end of a hollow fibre waveguide 4. The hollow fibre waveguide is held by the fittings at each end with the aid of hollow supporting tubes 3. Gas inlets and outlets 5 are provided by the free fitting inputs. Light 6 is focussed into the input via a lens 7 and is reemitted at the distal end where the intensity is monitored by a detector 8.

**Figure 2** shows a schematic diagram showing a first preferred embodiment for a gas cell end piece. A tube fitting 1 in the elbow configuration which has been processed to allow a window 2 to be fixed in a recessed position oriented normal to the incoming light beam. The fitting is attached to a hollow supporting tube 3 of the correct outer diameter which serves to hold one end of a hollow fibre waveguide 4. The free input of the tube fitting serves as either a gas inlet or outlet 5.

**Figure 3** shows a schematic diagram of a second preferred embodiment for a gas cell end piece. A tube fitting 1 in the elbow configuration which has been processed to allow a window 2 to be fixed preferably at the Brewster angle to the incoming beam. The fitting is attached to a hollow supporting tube 3 of the correct outer diameter which serves to hold one end of a hollow fibre waveguide 4. The free input of the tube fitting serves as either a gas inlet or outlet 5.

**Figure 4** shows a schematic diagram of a comparative example whereby the gas cell end piece is sealed with an adhesive 9.

**Figure 5** shows a schematic diagram of a comparative example whereby the tube fitting 1 is fitted directly onto the hollow fibre waveguide 4 with no supporting tubing used.

**Figure 6** shows a schematic diagram of an embodiment in which the tube fitting 1 connects to two hollow fibre waveguides 4 and light at a first frequency may pass through the window and light at a second frequency may be reflected.

**Figure 7** shows a tube fitting 1 in the straight union configuration which is attached to a hollow supporting tube 3 holding one end of a hollow fibre waveguide 4 at each input of the tube fitting. This is a preferred arrangement for a connection between two sections of hollow fibre waveguide which may enable the creation of longer path length gas cells.

**Figure 8** shows alternative arrangements utilizing tube fittings in the tee configuration as a gas cell end piece (Fig. 8A) and connector (Fig. 8B) and utilizing tube fittings in the cross configuration as a gas cell end piece (Fig. 8C) and connector (Fig 8D).

**Figure 9** shows experimental data of the measured methane concentration as a function of expected concentration based on flow rates set on a network of mass flow controllers (MFCs). Data was obtained using a spectroscopic system incorporating a 5 m path length hollow fibre waveguide gas cell.

**Figure 10** shows a plot of the Allan-Werle deviation of experimental data collected through a 30 m path length Herriott cell and a 5 m path length hollow fibre waveguide gas cell over a 24 hour period.

**Figure 11** shows experimental data of the absorption difference across laser pulses as 50 ppm methane gas fills and is evacuated from a 5 m path length hollow fibre waveguide gas cell (a) and a 30 m path length Herriott cell (b). The $t_{90}$ - $t_{10}$ response time ($\Delta t$) for both the rising and falling slopes is indicated.

Detailed Description

The present disclosure relates to a gas cell that has a low volume and permits gas flow with a fast response time. In a preferred embodiment, a hollow fibre waveguide is terminated at both ends with a connector, e.g. a tube fitting, which comprises a window to allow both continuous gas flow through the fitting and light entry and exit.

The following key components are referred to in this disclosure:

-     A gas cell may be a device used to contain a gaseous analyte whilst allowing the passage of light through it such that optical spectroscopy may be performed. A typical method of extending path length is to utilize multiple optical passes, such as that described in European patent no EP 2 375 237 A1.

- A hollow fibre waveguide may be a device used for transmitting electromagnetic radiation from the UV-visible to infra-red wavelength regions. Their main advantages over more conventional solid core optical fibre waveguides are their ability to transmit higher energies and longer wavelengths. An example of a hollow fibre waveguide comprises a hollow, flexible plastic or silica tube. The tube may be internally coated with a metal, for example silver. The silver may be exposed to a halogen forming a dielectric coating which serves to improve reflectivity at the wavelength of choice, for example 10.6 $\mu$m for the transmission of $CO_2$ laser light. Hollow fibre waveguides are described in US patents nos 4,930,863, 5,440,664, and 5,567,471, and European patent no EP 0 344 478 B1.

- A connector, e.g. tube fitting, or compression fitting, may be used to connect one tube end with another tube end. Such fittings may take the form of tee fittings or elbow fittings for example. The tube fitting may provide a seal against leakage and grip the tube to prevent loss of seal. They may for example be constructed from materials including, but not limited to, metal, for example stainless steel or brass, or polymer materials.

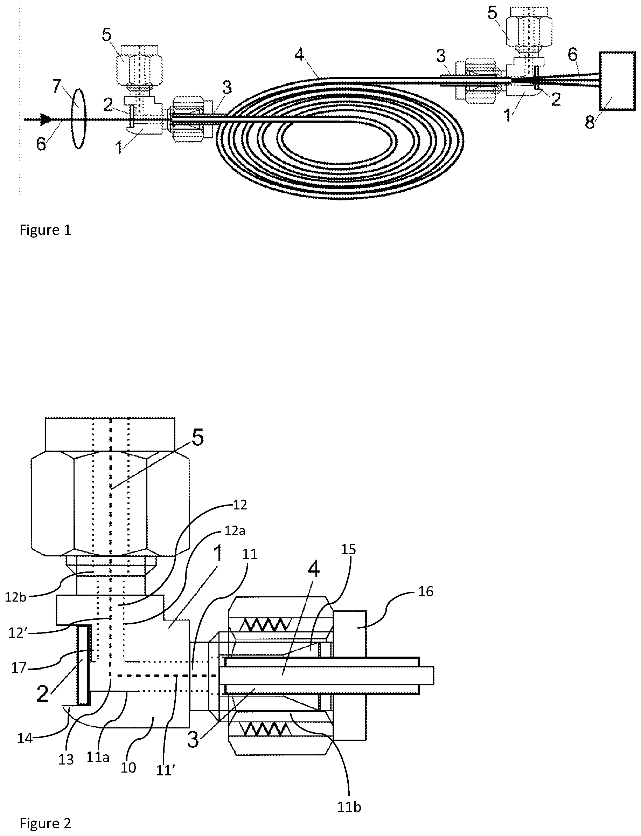

Figure 1 shows an embodiment of an experimental spectroscopy arrangement utilizing the connector 1 of the present disclosure. Light 6 from a light source (not shown) is focussed into the hollow fibre waveguide 4 through a window 2 in a connector 1 using a lens 7. The waveguide 4 may be coiled rather than straight, which may provide a long path length in a small footprint. Connectors 1 may be provided at either end of the waveguide 4 and may be in the same configuration as that presented in Figure 2. Light 6 exiting the waveguide 4 passes through a further connector 1 and window. The light 6 is then collected and monitored by a detector 8.

A free end of the connectors 1 is used to connect to the gas supply and serves as either in inlet or an outlet 5. The gas inlets and outlets 5 in the present disclosure are composed of tube fittings and therefore may be readily compatible with external gas supply systems.

As shown in Figure 1, light may be coupled into the cell with a lens that is positioned outside of the gas flow. However, light exiting the cell may be coupled to the detector 8 using a lens, or the detector may be placed adjacent to the exit so as to receive a large proportion of the light exiting the cell.

In the experimental example that is described below, the hollow fibre waveguides may be available for example with inner bore diameters ranging from 300 $\mu$m to 1,000 $\mu$m (outer diameters of 600 $\mu$m to 1,700 $\mu$m). Hollow fibre waveguides may be manufactured for example in lengths of 5 m, which means that in the example of the aforementioned diameters the internal volume of the hollow fibre waveguides themselves would range from 353 $\mu$l to 3,930 $\mu$l. An advantage of the gas cells constructed in the manner described here is that the connectors contribute a relatively small increase in the total volume of the gas cell, with minimal "dead volume".

A preferred embodiment the connector 1 comprises a tube fitting in an elbow configuration which has been processed so that a window can be embedded. Figure 2 shows an embodiment whereby the tube fitting has been modified in such a way that the window 2 can be affixed which is oriented normally to the hollow fibre waveguide 4 entrance. The tube fitting may be further modified with a hole to allow transmission of the light from the window into the hollow fibre waveguide.

As depicted, the connector 1 comprises a body 10 in which there is provided a first bore 11 having a first central axis 11' and a second bore 12 having a second central axis 12'. The first and second bores 11, 12 may be cylindrical, e.g. with the same diameter. The first bore 11 is configured to receive the hollow fibre waveguide 4. The second bore 12 is in fluidic communication with a gas source or sink via the inlet/outlet 5.

The first and second bores 11, 12 meet at a junction 13 such that the first and second bores are in fluidic communication with each other. The second central axis 12' is disposed at an angle, e.g. a right angle, relative to the first central axis 11'.

The window 2 is provided at the junction 13 where the first and second bores meet. For example, the window 2 may be provided proximal to the junction 13, e.g. in close proximity to the junction. As depicted in Figure 2, the window 2 may be provided adjacent to, e.g. immediately adjacent to, the junction 13 where the first and second bores meet. The window 2 may be positioned such that the minimum distance between the window and the junction of the first and second central axes 11', 12' is less than 150% of the diameter of the first or second bore, e.g. less than 100% of the diameter of the first or second bore.

As shown in Figure 2, the connector 1 may comprise a recess 14 in the body 10 of the connector. The recess 14 may be in line with and opposite the first bore 11. The recess may be configured to receive the window 2. The window 2 and/or recess 14 may be circular.

The connector 1 may comprise a wall 17 provided between the window 2, e.g. the bottom of the recess 14, and the second bore 12. The wall 17 may provide an at least partial mounting surface for the window to abut. A minimum thickness of the wall 17 between the recess and the second bore may be less than a diameter of the first or second bore, e.g. less than half a diameter of the first or second bore.

The hollow fibre waveguide 4 is supported by an elongated sleeve 3, e.g. a section of tubing, made for example from stainless steel, which has an outer diameter matching the inner diameter of an end of the first bore 11. The end of the hollow fibre waveguide 4 may preferably protrude slightly from the section of supporting tubing. The free input of the tube fitting, without the inserted end of a hollow fibre waveguide, may serve as either a gas inlet or outlet 5. In alternative embodiments, the end of the hollow fibre waveguide may lie flush with the end of the section of supporting tubing 3, or be recessed from the end of the supporting tubing.

Optical alignment of the whole end piece to the incoming optical path may preferably be achieved by mechanical support and manipulation of the supportive tubing 3. Alternatively alignment may be achieved by mechanical support and manipulation of the tube fitting.

The first bore 11 may comprise a first portion 11a with a first diameter and a second portion 11b with a second diameter. The first diameter may be smaller than the second diameter. Accordingly, the first bore 11 may comprise a shoulder, e.g. an annular shoulder, where the first and second portions meet. The first portion 11a may meet the second bore 12 at the junction 13. The second portion 11b may receive the hollow fibre waveguide 4 and may comprise a tapered end. For example, the elongated sleeve 3 and/or hollow fibre waveguide 4 may substantially fill the second portion 11b of the first bore 11. A similar arrangement may apply to the second bore 12, e.g. with first and second diameter portions 12a, 12b.

A diameter of the first bore 11, e.g. first portion 11a, may be less than twice the outer diameter of the hollow fibre waveguide 4. In particular, a diameter of the first bore 11, e.g. first portion 11a, may be less than 150% of the outer diameter of the hollow fibre waveguide. Having bore diameters close to the diameter of the hollow fibre waveguide helps to minimise the internal volume of the connector 1.

The connector 1 further comprises a frusto-conical sleeve 15 configured to receive the elongated sleeve 3 in a central passage of the frusto-conical sleeve. The frusto-conical sleeve 15 is received in the tapered end of the first bore 11. The connector 1 may further comprise an end cap 16 through which the hollow fibre waveguide 4 may pass. The end cap 16 may be configured to threadably engage the body 10 and urge the frusto-conical sleeve 15 into the tapered end so as to form a seal between the body and the hollow fibre waveguide.

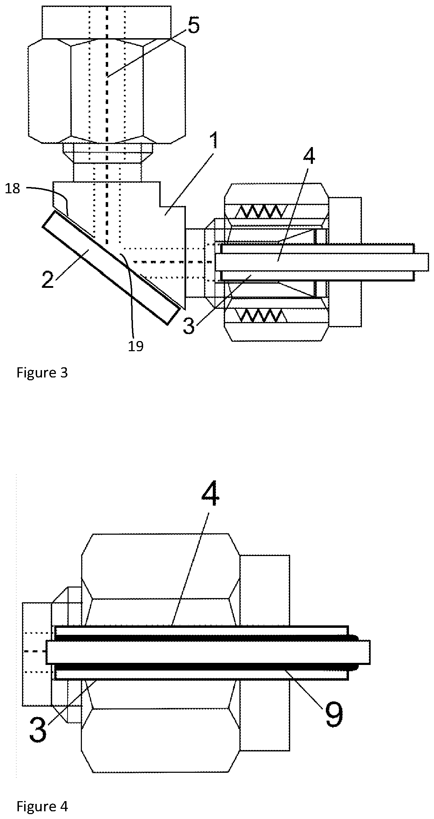

In the arrangement shown in Figure 2, a midline plane of the window 2 is perpendicular to the first central axis 11'. However, in an alternative arrangement depicted in Figure 3, a midline plane of the window may be disposed at a non-perpendicular angle relative to the first central axis. In this arrangement, the connector 1 has been modified such that the window 2 can be affixed at the Brewster angle for the material of which the window is composed and for the wavelength of the light used. Alignment at the Brewster angle may serve to reduce the magnitude of interference fringes caused by reflections within the window or between the window and other surfaces in the optical path.

The window 2 may be positioned such that the window intersects the junction 13 of the first and second bores 11, 12. The connector body 10 may comprise a planar surface 18, which intersects the junction and as such defines an opening 19 which the window 2 covers. The opening 19 may intersect the first and/or second central axes 11', 12'. A surface of the window 2 abuts the planar surface 18. The hollow fibre waveguide 4 may otherwise be supported in an elongated sleeve 3 in the same manner as in Figure 2. Likewise, the free input of the fitting 5 is used to connect to the gas supply and serves as either in inlet or an outlet. With reference to Figure 4, the inner diameter of the supporting tubing 3 may be larger than the outer diameter of the hollow fibre waveguide 4. A sealant 9, for example an adhesive, may be used to secure the hollow fibre waveguide 4 to the inner surface of the elongated sleeve 3 to provide a gas-tight seal and to fill the "dead volume" in a region of the cell that may otherwise not be within the region of continuous gas flow.

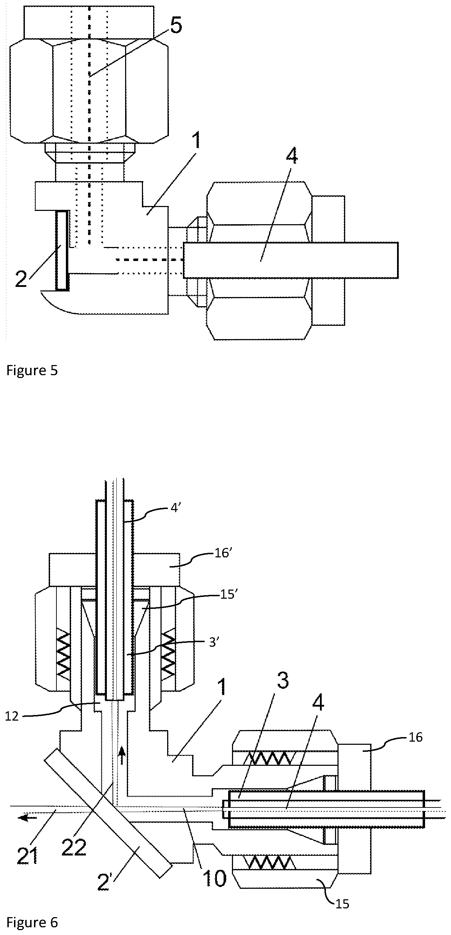

In a comparative example, the supportive tubing 3 may not be present and the hollow fibre waveguide 4 may be directly attached to the connector 1. An example of such an example is shown in Figure 5. In this example, the frusto-conical sleeve 15 directly receives the hollow fibre waveguide 4 in the central passage of the frusto-conical sleeve.

Referring now to Figure 6, the second bore 12 may be in fluidic communication with a gas source or sink via a further hollow fibre waveguide 4'. The second bore 12 may be arranged in a similar way to the first bore 11 described above. Furthermore, the connector 1 may be connected to the further hollow fibre waveguide 4' in a similar way to that described above for the hollow fibre waveguide, e.g. with an elongated sleeve 3', frusto-conical sleeve 15' and end cap 16'.

In the example shown in Figure 6, the window 2' may be non-perpendicular to the first and second bore axes 11', 12' and may be selectively reflective. For example, the window 2' may permit light 21 at a first frequency to pass through the window and reflect light 22 at a second frequency. The light 21 that passes through the window 2' may pass into a detector 8. The reflected light 22 may pass into the second bore 12 and through a further hollow fibre waveguide 4'. The reflected light may then enter a further connector with a window that permits light at the second frequency to pass through. A further detector may then receive the reflected light. With such an arrangement light at different frequencies may have different optical path lengths through the gas cell. The length of the gas cell can thus be optimised for a particular light frequency, which may be required for sensing a particular species.

Further connectors 1 with selectively reflective windows that reflect light at different frequencies and hollow fibre waveguides may be provided therebetween in a series arrangement. In this way three or more light frequencies may each have optimised optical path lengths through the gas cell.

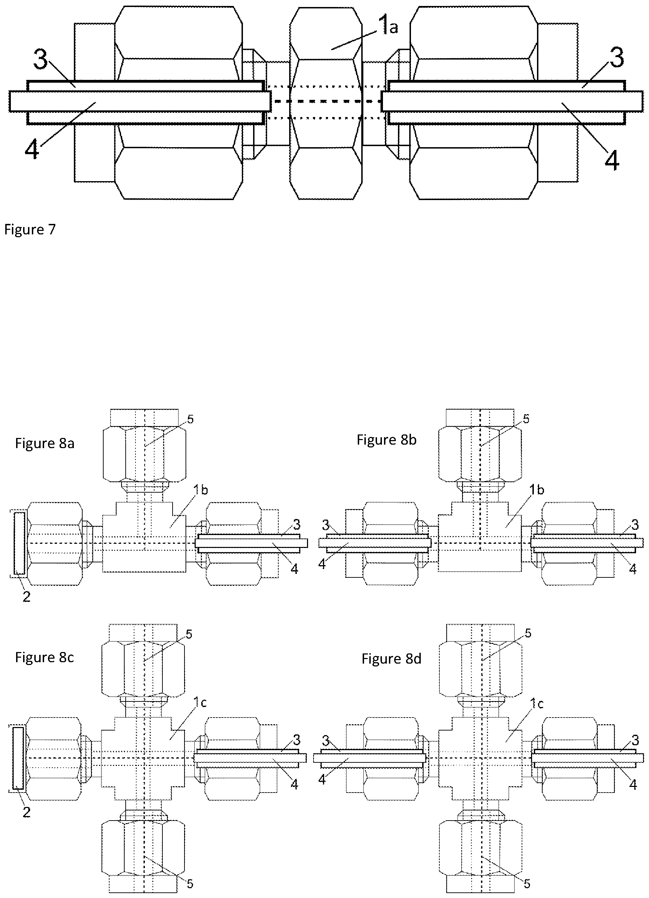

Increasing the length of the gas cell can improve the signal-to-noise ratio of a spectroscopic measurement. One method of achieving this may be to connect multiple sections of hollow fibre waveguide. This may be achieved using a connector 1a in the straight union configuration, as shown in Figure 7. Straight sections of solid tube 3 may be used to support the end section of the hollow fibre waveguides 4 and may be inserted and fitted into each inlet of the tube fitting. A gap of a few millimetres may exist between the two sections of hollow fibre waveguide, however because the numerical aperture of the launch may be relatively low, particularly for larger hollow fibre waveguides, the optical losses experienced here may be minimal.

Alternative arrangements utilising tee fittings 1b and cross tube fittings 1c for both end pieces and connectors are shown in Figure 8. Gas cell connectors constructed using these configurations may be potentially beneficial because they allow the incorporation of additional gas inlets and outlets along the length of the gas cell. The end pieces shown here may require less modification of the tube fitting in order to enable a window to be affixed than those shown in Figure 2 and Figure 3 and may therefore be simpler to produce.

The achievable signal-to-noise ratio may be dependent not only on the path length but also on the magnitude of the received light intensity at the detector. Hollow fibre waveguides may experience optical losses that increase with the length of the waveguide, therefore the improvement in signal-to-noise ratio with increased path length may be limited. The level of received signal may depend on a number of factors including but not limited to the available optical power from the light source, the reflectivity of the inner wall and the coil radius of the hollow fibre waveguide, and the sensitivity of the detector. Therefore, there may be a length of gas cell according to the present disclosure for which the signal-to-noise ratio is optimised.

We now illustrate an embodiment of the disclosure with an experimental example.

A 5 m hollow fibre waveguide gas cell with an inner bore diameter of 1,000 $\mu$m which was coiled with a radius of 15 cm was validated using a spectroscopy system consisting of pulsed QCL laser with a wavelength of 7.82 $\mu$m (1279 cm$^{-1}$) and a mercury cadmium telluride detector with a detectivity of $2.6 \times 10^9$ cmHz$^{1/2}$/W. The gas cell end pieces were in the configuration shown in Figure 2. The laser pulsewidth was 800 ns and the pulse repetition frequency was 50 kHz. The frequency variation across the pulse caused by thermal variation of the laser chip resulted in a wavelength change throughout each pulse, such that each pulse provided a measurement of light intensity across a spectrum of wavelengths from 7.825 $\mu$m (1277.96 cm$^{-1}$) to 7.835 $\mu$m (1276.32 cm$^{-1}$). Methane was used as a test gas and a pair of spectral lines at 7.828 $\mu$m (1277.47 cm$^{-1}$) and at 7.832 $\mu$m (1276.84 cm$^{-1}$) was monitored for a range of methane concentrations from 50 ppb to 1,000 ppm. Multiple pulses were averaged to comprise a single spectroscopic measurement, with the averaged spectral acquisition frequencies indicated in the experiments below. Concentration measurements were obtained by integrating Lorentzian fits to the recovered lineshapes referenced to data from the HITRAN database [Rothman *et al* 1987].

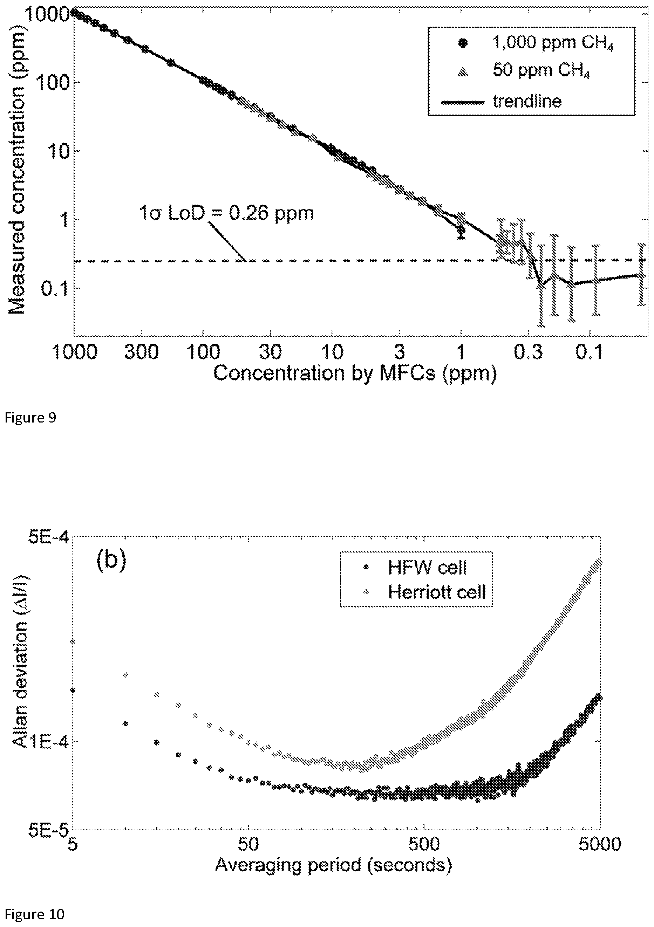

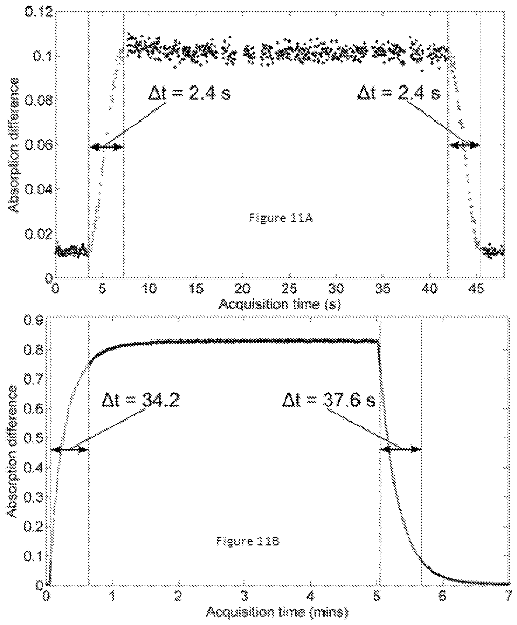

The results of this investigation are shown in Figure 9. Two different methane supplies were used, with concentrations of 50 ppm and 1,000 ppm, with the other concentrations obtained by mixing the methane from one of the aforementioned cylinders with hydrocarbon free air, using a network of mass flow controllers (MFCs). The error bars on the measurements were obtained from the standard deviation of twenty measurements. The limit of detection (LOD) (1$\sigma$) was found to be 0.26 ppm below which no reliable measurements could be made due to detector noise. The noise equivalent absorbance (NEA) for this system was evaluated from the raw pulse data and found to be $4.1 \times 10^{-4}$.

The long term stability of the cell was assessed and compared with that of a Herriott cell (such as that described in European patent no EP 2 375 237 A1) with a folded path length of 30 m. Although the sensitivity of the system with the Herriott cell present was higher than the hollow waveguide gas cell (1$\sigma$ LOD of 35 ppb), its NEA was found to be slightly higher at $5.9 \times 10^{-4}$. A series of pulses was recorded over a 24 period through both cells simultaneously using two detectors, with a pulse acquisition frequency of 0.2 Hz. The Allan - Werle deviation is the result of a statistical analysis that is often used to assess the influence of averaging and drift in spectroscopic systems [Werle *et al* 1993]. Typically plotted as the Allan deviation (square root of the variance) on a log-log plot, a minimum in the characteristic 'V' shaped traces produced indicates the optimum averaging period. At shorter averaging periods white noise dominates and averaging improves the NEA but at longer periods low frequency effects cause the NEA to deteriorate. Allan - Werle deviations of the data from the Herriott cell and hollow fibre waveguide (HFW) cell are shown in Figure 10. The data show that averaging for a period of up to a few hundreds of seconds will improve repeatability but afterwards drift dominates. The plateauing of the hollow fibre waveguide gas cell data between averaging periods of approximately 200 s and 1,000 s indicate that further improvement is affected by the digitization limit of the detectors and suggests that a higher resolution detection system may result in even better levels of repeatability.

An advantage of the low volume hollow fibre waveguide gas cell of the present disclosure is its fast response time. This was measured experimentally and compared with that of the Herriott cell. A series of pulses, with 300 ns pulsewidth and an acquisition frequency of 17 Hz, was acquired for both cells sequentially. During the experiment, the cell was first filled with HC free air, passing continuously through the cell at a flow rate of 1,000 cm$^3$min$^{-1}$. At a time *t*=0, the mass flow controllers were used to increase the concentration of methane to 50 ppm while the flow rate was maintained at 1,000 cm$^3$min$^{-1}$.

For each averaged series of pulses, the maximum and minimum absorbance across the pulse was recorded as a measure of the methane concentration in the cell. The difference between maximum and minimum absorption for each spectrum is shown in Figure 1. The response time $\Delta t$ is defined as the $t_{90} - t_{10}$ time where $t_{90}$ is the time at which the signal is at 90% of its final equilibrium value and $t_{10}$ is the time when the signal is at 10% of its final equilibrium value. Figure 1 (a) shows the absorption data obtained through the hollow fibre waveguide cell of the present disclosure with a response time $\Delta t$ = 2.4 s obtained for both the rise and the fall. Figure 1 (b) shows the absorption data obtained through the Herriott cell with response times of $\Delta t$ = 34.2 s and $\Delta t$ = 37.6 s observed for the rise and the fall respectively. The Herriott cell data were less noisy than the hollow fibre waveguide cell data due to its greater absorption sensitivity, however the hollow fibre waveguide cell's response was more than an order of magnitude faster due to its lower internal volume.

It will be appreciated by those skilled in the art that although the invention has been described by way of example, with reference to one or more examples, it is not limited to the disclosed examples and alternative examples may be constructed without departing from the scope of the invention as defined by the appended claims.

**Claims**

1. A connector (1, 1a) for a hollow fibre waveguide (4) gas cell, the connector (1, 1a) comprising:

   a first bore (11) comprising a first central axis (11'), the first bore (11) comprising a tapered end and being configured to receive a hollow fibre waveguide (4);
   a second bore (12) comprising a second central axis (12'), the second bore (12) being configured to provide a fluidic communication with a gas source or sink, which provides or receives a gas passing through the hollow fibre wave guide, wherein the first and second bores meet at a junction (13) such that the first and second bores are in fluidic communication with each other, the second central axis (12') being disposed at an angle relative to the first central axis (11'); and
   a window (2, 2') provided at the junction (13) where the first and second bores meet,
   **characterized in that** the connector (1, 1a) further comprises an elongated sleeve (3, 3') configured to receive the hollow fibre waveguide (4), the hollow fibre waveguide (4) being disposed in a central passage of the elongated sleeve (3, 3'),
   wherein the connector (1, 1a) further comprises a frusto-conical sleeve (15, 15') configured to receive the hollow fibre waveguide (4) in a central passage of the frusto-conical sleeve (15, 15'), the frusto-conical sleeve (15, 15') being received in the tapered end of the first bore (11), and
   wherein the frusto-conical sleeve (15, 15') is configured to receive the elongated sleeve (3, 3') in the central passage of the frusto-conical sleeve (15, 15').

2. The connector (1, 1a) of claim 1, wherein the connector (1, 1a) comprises a recess (14) opposite the first bore (11), the recess (14) being configured to receive the window (2, 2') and wherein the connector (1, 1a) comprises a wall (17) provided between the recess (14) and the second bore (12), the wall (17) providing a mounting surface, which a surface of the window (2, 2') abuts.

3. The connector (1, 1a) of claim 2, wherein a minimum thickness of the wall (17) between the recess (14) and the second bore (12) is less than a diameter of the first or second bore (12).

4. The connector (1, 1a) of claim 1, wherein the window (2, 2') is positioned such that the window (2, 2') intersects the junction (13) of the first and second bores.

5. The connector (1, 1a) of claim 4, wherein the connector (1, 1a) comprises a planar surface (18), wherein the planar surface (18) intersects the junction (13) so as to define an opening (19), the opening (19) intersecting the first and/or second central axes (12'), wherein a surface of the window (2, 2') abuts the planar surface (18).

6. The connector (1, 1a) of any of the preceding claims, wherein a midline plane comprising a longitudinal axis of the window (2, 2') is perpendicular to the first central axis (11') or is disposed at a non-perpendicular angle, such as the Brewster angle, relative to the first central axis (11').

7. The connector (1, 1a) of any of the preceding claims, wherein the window (2, 2') is non-perpendicular to the first and second central axes (11', 12') and is selectively reflective so as to permit light (6) from the first bore (11) at a first frequency to pass through the window (2, 2'), and to reflect light (6) from the first bore (11) at a second frequency into the second bore (12).

8. The connector (1, 1a) of any of the preceding claims, wherein the connector (1, 1a) further comprises sealant provided between the elongated sleeve (3, 3') and the hollow fibre waveguide (4).

9. The connector (1, 1a) of any of the preceding claims, wherein the connector (1, 1a) comprises a body (10) through which the first and second bores extend, and wherein the connector (1, 1a) further comprises an end cap (16, 16') through which the hollow fibre waveguide (4) passes, the end cap (16, 16') being configured to threadably engage the body (10) and urge the frusto-conical sleeve (15, 15') into the tapered end so as to form a seal between the body (10) and the hollow fibre waveguide (4).

10. The connector (1, 1a) of any of the preceding claims, wherein the first bore (11) comprises a first portion with a first diameter and a second portion (11b) with a second diameter, the first diameter being smaller than the second diameter, wherein the first portion meets the second bore (12) at the junction (13) and the second portion (11b) receives the waveguide.

11. A hollow fibre waveguide gas cell comprising the connector (1, 1a) of any of the preceding claims and a hollow fibre waveguide (4).

12. The hollow fibre waveguide gas cell of claim 11 when dependent on claim 10, wherein the elongated sleeve (3, 3') and hollow fibre waveguide (4) substantially fill the second portion (11b) of the first bore (11).

13. A method of determining the concentration of a species in a gaseous analyte, the method comprising using the connector (1, 1a) of any of claims 1 to 10 or the hollow fibre waveguide (4) gas cell of claim 11 or 12.

**Patentansprüche**

1. Ein Verbinder (1, 1a) für eine Gaszelle eines Hohlfaserwellenleiters (4), der Verbinder (1, 1a) umfassend:

eine erste Bohrung (11), umfassend eine erste Mittelachse (11'), wobei die erste Bohrung (11) ein verjüngtes Ende umfasst und konfiguriert ist, um einen Hohlfaserwellenleiter (4) aufzunehmen;
eine zweite Bohrung (12), umfassend eine zweite Mittelachse (12'), wobei die zweite Bohrung (12) konfiguriert ist, um eine Fluidverbindung mit einer Gasquelle oder einem Gaskörper bereitzustellen, die/der ein Gas bereitstellt oder erhält, das durch den Hohlfaserwellenleiter strömt, wobei sich die erste und die zweite Bohrung an einer Verbindungsstelle (13) treffen, sodass die erste und die zweite Bohrung in Fluidverbindung miteinander sind, wobei die zweite Mittelachse (12') in einem Winkel in Bezug auf die erste Mittelachse (11') angeordnet ist; und
ein Fenster (2, 2'), das an der Verbindungsstelle (13) bereitgestellt ist, an der die erste und die zweite Bohrung zusammentreffen, **dadurch gekennzeichnet, dass** der Verbinder (1, 1a) ferner eine längliche Hülse (3, 3') umfasst, die konfiguriert ist, um den Hohlfaserwellenleiter (4) aufzunehmen, wobei der Hohlfaserwellenleiter (4) in einem mittleren Durchgang der länglichen Hülse (3, 3') angeordnet ist,
wobei der Verbinder (1, 1a) ferner eine kegelstumpfförmige Hülse (15, 15') umfasst, die konfiguriert ist, um den Hohlfaserwellenleiter (4) in einem mittleren Durchgang der kegelstumpfförmigen Hülse (15, 15') aufzunehmen, wobei die kegelstumpfförmige Hülse (15, 15') in dem verjüngten Ende der ersten Bohrung (11) aufgenommen ist, und
wobei die kegelstumpfförmige Hülse (15, 15') konfiguriert ist, um die längliche Hülse (3, 3') in dem mittleren Durchgang der kegelstumpfförmigen Hülse (15, 15') aufzunehmen.

2. Verbinder (1, 1a) gemäß Anspruch 1, wobei der Verbinder (1, 1a) eine Aussparung (14) gegenüber der ersten Bohrung (11) umfasst, wobei die Aussparung (14) konfiguriert ist, um das Fenster (2, 2') aufzunehmen, und wobei der Verbinder (1, 1a) eine Wand (17) umfasst, die zwischen der Aussparung (14) und der zweiten Bohrung (12) bereitgestellt ist, wobei die Wand (17) eine Montagefläche bereitstellt, an die eine Fläche des Fensters (2, 2') anstößt.

3. Verbinder (1, 1a) gemäß Anspruch 2, wobei eine Mindeststärke der Wand (17) zwischen der Aussparung (14) und der zweiten Bohrung (12) kleiner ist als ein Durchmesser der ersten oder zweiten Bohrung (12).

4. Verbinder (1, 1a) gemäß Anspruch 1, wobei das Fenster (2, 2') positioniert ist, so dass das Fenster (2, 2') die Verbindungsstelle (13) der ersten und der zweiten Bohrung schneidet.

**5.** Verbinder (1, 1a) gemäß Anspruch 4, wobei der Verbinder (1, 1a) eine ebene Fläche (18) umfasst, wobei die ebene Fläche (18) die Verbindungsstelle (13) schneidet, sodass eine Öffnung (19) definiert ist, wobei die Öffnung (19) die erste und/oder die zweite Mittelachse (12') schneidet, wobei eine Fläche des Fensters (2, 2') an die ebene Fläche (18) anstößt.

**6.** Verbinder (1, 1a) gemäß einem der vorherigen Ansprüche, wobei eine Mittellinienebene umfassend eine Längsachse des Fensters (2, 2') senkrecht zu der ersten Mittelachse (11') ist oder in einem nicht senkrechten Winkel, wie beispielsweise dem Brewster-Winkel, in Bezug auf die erste Mittelachse (11') angeordnet ist.

**7.** Verbinder (1, 1a) gemäß einem der vorherigen Ansprüche, wobei das Fenster (2, 2') nicht senkrecht zu der ersten und der zweiten Mittelachse (11', 12') ist und selektiv reflektierend ist, um zu ermöglichen, dass Licht (6) aus der ersten Bohrung (11) mit einer ersten Frequenz durch das Fenster (2, 2') verläuft, und um Licht (6) aus der ersten Bohrung (11) mit einer zweiten Frequenz in die zweite Bohrung (12) zu reflektieren.

**8.** Verbinder (1, 1a) gemäß einem der vorherigen Ansprüche, wobei der Verbinder (1, 1a) ferner ein Dichtungsmittel umfasst, das zwischen der länglichen Hülse (3, 3') und dem Hohlfaserwellenleiter (4) bereitgestellt ist.

**9.** Verbinder (1, 1a) gemäß einem der vorherigen Ansprüche, wobei der Verbinder (1, 1a) einen Körper (10) umfasst, durch den sich die erste und die zweite Bohrung erstrecken, und wobei der Verbinder (1, 1a) ferner eine Endkappe (16, 16') umfasst, durch die der Hohlfaserwellenleiter (4) verläuft, wobei die Endkappe (16, 16') konfiguriert ist, um den Körper (10) schraubend einzugreifen und die kegelstumpfförmige Hülse (15, 15') in das konische Ende zu drücken, um eine Dichtung zwischen dem Körper (10) und dem Hohlfaserwellenleiter (4) zu bilden.

**10.** Verbinder (1, 1a) gemäß einem der vorherigen Ansprüche, wobei die erste Bohrung (11) einen ersten Abschnitt mit einem ersten Durchmesser und einen zweiten Abschnitt (11b) mit einem zweiten Durchmesser umfasst, wobei der erste Durchmesser kleiner ist als der zweite Durchmesser, wobei der erste Abschnitt an der Verbindungsstelle (13) auf die zweite Bohrung (12) trifft und der zweite Abschnitt (11b) den Wellenleiter aufnimmt.

**11.** Hohlfaserwellenleiter-Gaszelle, umfassend den Verbinder (1, 1a) gemäß einem der vorstehenden Ansprüche und einen Hohlfaserwellenleiter (4).

**12.** Hohlfaserwellenleiter-Gaszelle gemäß Anspruch 11 in Abhängigkeit von Anspruch 10, wobei die längliche Hülse (3, 3') und der Hohlfaserwellenleiter (4) im Wesentlichen den zweiten Abschnitt (11b) der ersten Bohrung (11) füllen.

**13.** Verfahren zum Bestimmen der Konzentration einer Spezies in einem gasförmigen Analyten, das Verfahren umfassend ein Verwenden des Verbinders (1, 1a) gemäß einem der Ansprüche 1 bis 10 oder die Gaszelle des Hohlfaserwellenleiters (4) gemäß Anspruch 11 oder 12.

**Revendications**

**1.** Un connecteur (1, 1a) pour une cellule à gaz à guide d'ondes à fibres creuses (4), le connecteur (1, 1a) comprenant :

un premier alésage (11) comprenant un premier axe central (11'), le premier alésage (11) comprenant une extrémité effilée et étant configuré pour recevoir un guide d'ondes à fibres creuses (4) ;
un deuxième alésage (12) comprenant un deuxième axe central (12'), le deuxième alésage (12) étant configuré pour fournir une communication fluidique avec une source ou une évacuation de gaz, qui fournit ou reçoit un gaz passant à travers le guide d'ondes à fibres creuses, dans lequel les premier et deuxième alésages se rencontrent à une jonction (13) de sorte que les premier et deuxième alésages sont en communication fluidique l'un avec l'autre, le deuxième axe central (12') étant disposé à un angle par rapport au premier axe central (11') ; et
une fenêtre (2, 2') prévue à la jonction (13) où les premier et deuxième alésages se rencontrent, **caractérisé en ce que** le connecteur (1, 1a) comprend en outre un manchon allongé (3, 3') configuré pour recevoir le guide d'ondes à fibres creuses (4), le guide d'ondes à fibres creuses (4) étant disposé dans un passage central du manchon allongé (3, 3'),
dans lequel le connecteur (1, 1a) comprend en outre un manchon tronconique (15, 15') configuré pour recevoir le guide d'ondes à fibres creuses (4) dans un passage central du manchon tronconique (15, 15'), le manchon tronconique (15, 15') étant reçu dans l'extrémité effilée du premier alésage (11), et
dans lequel le manchon tronconique (15, 15') est configuré pour recevoir le manchon allongé (3, 3') dans le passage central du manchon tronconique (15, 15').

2. Le connecteur (1, 1a) selon la revendication 1, dans lequel le connecteur (1, 1a) comprend un évidement (14) opposé au premier alésage (11), l'évidement (14) étant configuré pour recevoir la fenêtre (2, 2') et dans lequel le connecteur (1, 1a) comprend une paroi (17) prévue entre l'évidement (14) et le deuxième alésage (12), la paroi (17) fournissant une surface de montage, contre laquelle une surface de la fenêtre (2, 2') vient en butée.

3. Le connecteur (1, 1a) selon la revendication 2, dans lequel une épaisseur minimale de la paroi (17) entre l'évidement (14) et le deuxième alésage (12) est inférieure à un diamètre du premier ou du deuxième alésage (12).

4. Le connecteur (1, 1a) selon la revendication 1, dans lequel la fenêtre (2, 2') est positionnée de sorte que la fenêtre (2, 2') croise la jonction (13) des premier et deuxième alésages.

5. Le connecteur (1, 1a) selon la revendication 4, dans lequel le connecteur (1, 1a) comprend une surface plane (18), dans lequel la surface plane (18) croise la jonction (13) de manière à définir une ouverture (19), l'ouverture (19) croisant les premier et / ou deuxième axes centraux (12'), dans lequel une surface de la fenêtre (2, 2') vient en butée contre la surface plane (18).

6. Le connecteur (1, 1a) selon l'une quelconque des revendications précédentes, dans lequel un plan de ligne médiane comprenant un axe longitudinal de la fenêtre (2, 2') est perpendiculaire au premier axe central (11') ou est disposé à un angle non-perpendiculaire, tel que l'angle de Brewster, par rapport au premier axe central (11').

7. Le connecteur (1, 1a) selon l'une quelconque des revendications précédentes, dans lequel la fenêtre (2, 2') est non-perpendiculaire aux premier et deuxième axes centraux (11', 12') et est sélectivement réfléchissante de manière à permettre à la lumière (6) provenant du premier alésage (11) à une première fréquence de passer à travers la fenêtre (2, 2'), et à réfléchir la lumière (6) provenant du premier alésage (11) à une deuxième fréquence dans le deuxième alésage (12).

8. Le connecteur (1, 1a) selon l'une quelconque des revendications précédentes, dans lequel le connecteur (1, 1a) comprend en outre un agent d'étanchéité prévu entre le manchon allongé (3, 3') et le guide d'ondes à fibres creuses (4).

9. Le connecteur (1, 1a) selon l'une quelconque des revendications précédentes, dans lequel le connecteur (1, 1a) comprend un corps (10) à travers lequel s'étendent les premier et deuxième alésages, et dans lequel le connecteur (1, 1a) comprend en outre un capuchon d'extrémité (16, 16') à travers lequel passe le guide d'ondes à fibres creuses (4), le capuchon d'extrémité (16, 16') étant configuré pour engager par filetage le corps (10) et pousser le manchon tronconique (15, 15') dans l'extrémité effilée de manière à former un joint d'étanchéité entre le corps (10) et le guide d'ondes à fibres creuses (4).

10. Le connecteur (1, 1a) selon l'une quelconque des revendications précédentes, dans lequel le premier alésage (11) comprend une première partie avec un premier diamètre et une deuxième partie (11b) avec un deuxième diamètre, le premier diamètre étant plus petit que le deuxième diamètre, dans lequel la première partie rencontre le deuxième alésage (12) à la jonction (13) et la deuxième partie (11b) reçoit le guide d'ondes.

11. Une cellule à gaz à guide d'ondes à fibres creuses comprenant le connecteur (1, 1a) selon l'une quelconque des revendications précédentes et un guide d'ondes à fibres creuses (4).

12. La cellule à gaz à guide d'ondes à fibres creuses selon la revendication 11 lorsqu'elle dépend de la revendication 10, dans laquelle le manchon allongé (3, 3') et le guide d'ondes à fibres creuses (4) remplissent sensiblement la deuxième partie (11b) du premier alésage (11).

13. Un procédé de détermination de la concentration d'une espèce dans un analyte gazeux, le procédé comprenant l'utilisation du connecteur (1, 1a) selon l'une quelconque des revendications 1 à 10 ou de la cellule à gaz à guide d'ondes à fibres creuses (4) selon la revendication 11 ou 12.

Figure 1

Figure 2

Figure 3

Figure 4

Figure 5

Figure 6

Figure 7

Figure 8a

Figure 8b

Figure 8c

Figure 8d

Figure 9

Figure 10

Figure 11A

Figure 11B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5457709 A
- US 5936989 A
- US 5957858 A
- US 5165773 A
- EP 1229322 A1
- WO 2006102593 A2
- US 5773828 A
- EP 2375237 A1
- US 4930863 A
- US 5440664 A
- US 5567471 A
- EP 0344478 B1